# EUROPEAN PATENT APPLICATION

(11) **EP 1 146 755 A1**
(43) Date of publication of application: **17.10.2001**
(21) Application number: 01303213.1
(22) Date of filing: 05.04.2001
(51) Int. Cl.: H04Q 7/22

(54) **Monitoring of location-associated events**

(30) Priority: 11.04.2000 GB 0008888
(71) Applicant: Hewlett-Packard Company, Palo Alto, CA 94304 (US)
(72) Inventor: L'Anson, Colin, Frenchay, Bristol BS16 1JL (GB); Hawkes, Rycharde Jeffery, Clifton, Bristol BS8 2EJ (GB); McDonnel, James Thomas Edward, Clifton, Bristol BS8 2JU (GB); Wilcock, Lawrence, Malmesbury, Wiltshire SN16 9TU (GB); Crouch, Simon E., Chippenham, Wiltshire SN14 6DR (GB)
(74) Representative: Squibbs, Robert Francis

(57) **Abstract**

A method is provided for monitoring location-associated events such as the availability for collection at business premises of items previously ordered by a customer. The method involves storing a descriptor of the event of interest to the customer, the descriptor being stored, for example, in a third-party service system (40) by the business concerned. The descriptor explicitly or implicitly includes details of the parties and the location of the premises (70). Subsequently, when the customer comes near the business premises (70), the service system (40) determines a match with the event descriptor and thereupon carries out an event status check using status data provided by the business. The result of the status check is reported to the customer (115).

## Description

### Field of the Invention

The present invention relates to the monitoring of location-associated events and in particular, but not exclusively, to the checking of the status of a customer order when the customer is in the vicinity of the business concerned.

### Background of the Invention

Communication infrastructures suitable for mobile users (in particular, though not exclusively, cellular radio infrastructures) have now become widely adopted. Whilst the primary driver has been mobile telephony, the desire to implement mobile data-based services over these infrastructures, has led to the rapid development of data-capable bearer services across such infrastructures. This has opened up the possibility of many Internet-based services being available to mobile users.

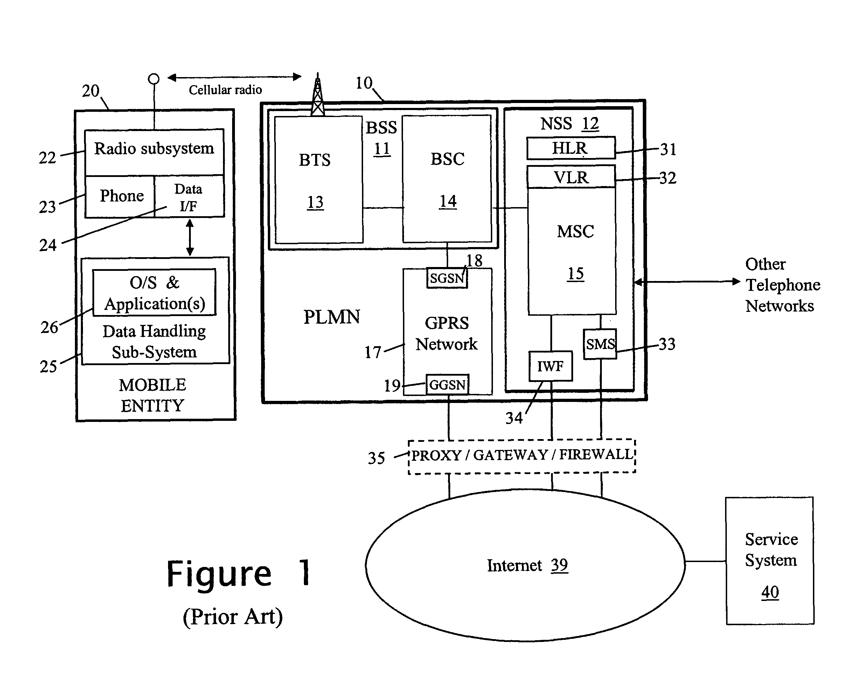

By way of example, Figure 1 shows one form of known communication infrastructure for mobile users providing both telephony and data-bearer services. In this example, a mobile entity 20, provided with a radio subsystem 22 and a phone subsystem 23, communicates with the fixed infrastructure of GSM PLMN (Public Land Mobile Network) 10 to provide basic voice telephony services. In addition, the mobile entity 20 includes a data-handling subsystem 25 interworking, via data interface 24, with the radio subsystem 22 for the transmission and reception of data over a data-capable bearer service provided by the PLMN; the data-capable bearer service enables the mobile entity 20 to communicate with a service system 40 connected to the public Internet 39. The data handling subsystem 25 supports an operating environment 26 in which applications run, the operating environment including an appropriate communications stack.

More particularly, the fixed infrastructure 10 of the GSM PLMN comprises one or more Base Station Subsystems (BSS) 11 and a Network and Switching Subsystem NSS 12. Each BSS 11 comprises a Base Station Controller (BSC) 14 controlling multiple Base Transceiver Stations (BTS) 13 each associated with a respective "cell" of the radio network. When active, the radio subsystem 22 of the mobile entity 20 communicates via a radio link with the BTS 13 of the cell in which the mobile entity is currently located. As regards the NSS 12, this comprises one or more Mobile Switching Centers (MSC) 15 together with other elements such as Visitor Location Registers 32 and Home Location Register 32.

When the mobile entity 20 is used to make a normal telephone call, a traffic circuit for carrying digitised voice is set up through the relevant BSS 11 to the NSS 12 which is then responsible for routing the call to the target phone (whether in the same PLMN or in another network).

With respect to data transmission to/from the mobile entity 20, in the present example three different data-capable bearer services are depicted though other possibilities exist. A first data-capable bearer service is available in the form of a Circuit Switched Data (CSD) service; in this case a full traffic circuit is used for carrying data and the MSC 32 routes the circuit to an Inter Working Function IWF 34 the precise nature of which depends on what is connected to the other side of the IWF. Thus, IWF could be configured to provide direct access to the public Internet 39 (that is, provide functionality similar to an IAP - Internet Access Provider IAP). Alternatively, the IWF could simply be a modem connecting to a PSTN; in this case, Internet access can be achieved by connection across the PSTN to a standard IAP.

A second, low bandwidth, data-capable bearer service is available through use of the Short Message Service that passes data carried in signalling channel slots to an SMS unit which can be arranged to provide connectivity to the public Internet 39.

A third data-capable bearer service is provided in the form of GPRS (General Packet Radio Service which enables IP (or X.25) packet data to be passed from the data handling system of the mobile entity 20, via the data interface 24, radio subsystem 21 and relevant BSS 11, to a GPRS network 17 of the PLMN 10 (and vice versa). The GPRS network 17 includes a SGSN (Serving GPRS Support Node) 18 interfacing BSC 14 with the network 17, and a GGSN (Gateway GPRS Support Node) interfacing the network 17 with an external network (in this example, the public Internet 39). Full details of GPRS can be found in the ETSI (European Telecommunications Standards Institute) GSM 03.60 specification. Using GPRS, the mobile entity 20 can exchange packet data via the BSS 11 and GPRS network 17 with entities connected to the public Internet 39.

The data connection between the PLMN 10 and the Internet 39 will generally be through a firewall 35 with proxy and/or gateway functionality.

Different data-capable bearer services to those described above may be provided, the described services being simply examples of what is possible.

In Figure 1, a service system 40 is shown connected to the Internet 40, this service system being accessible to the OS/application 26 running in the mobile entity by use of any of the data-capable bearer services described above. The data-capable bearer services could equally provide access to a service system that is within the domain of the PLMN operator or is connected to another public or private data network.

With regard to the OS/application software 26 running in the data handling subsystem 25 of the mobile entity 20, this could, for example, be a WAP application running on top of a WAP stack where "WAP" is the Wireless Application Protocol standard. Details of WAP can be found, for example, in the book "Official Wireless Application Protocol" Wireless Application Protocol Forum, Ltd published 1999 Wiley Computer Publishing. Where the OS/application software is WAP compliant, the firewall will generally also serve as a WAP proxy and gateway. Of course, OS/application 26 can comprise other functionality (for example, an e-mail client) instead of, or additional to, the WAP functionality.

The mobile entity 20 may take many different forms. For example, it could be two separate units such as a mobile phone (providing elements 22-24) and a mobile PC (data-handling system 25) coupled by an appropriate link (wireline, infrared or even short range radio system such as Bluetooth). Alternatively, mobile entity 20 could be a single unit such as a mobile phone with WAP functionality. Of course, if only data transmission/reception is required (and not voice), the phone functionality 24 can be omitted; an example of this is a PDA with built-in GSM data-capable functionality whilst another example is a digital camera (the data-handling subsystem) also with built-in GSM data-capable functionality enabling the upload of digital images from the camera to a storage server.

Whilst the above description has been given with reference to a PLMN based on GSM technology, it will be appreciated that many other cellular radio technologies exist and can typically provide the same type of functionality as described for the GSM PLMN 10.

Recently, must interest has been shown in "location-based", "location-dependent", or "location-aware" services for mobile users, these being services that take account of the current location of the user (or other mobile party). The most basic form of this service is the emergency location service whereby a user in trouble can press a panic button on their mobile phone to send an emergency request-for-assistance message with their location data appended. Another well known location-based service is the provision of traffic and route-guiding information to vehicle drivers based on their current position. A further known service is a "yellow pages" service where a user can find out about amenities (shops, restaurants, theatres, etc.) local to their current location. The term "location-aware services" will be used herein to refer generically to these and similar services where a location dependency exists.

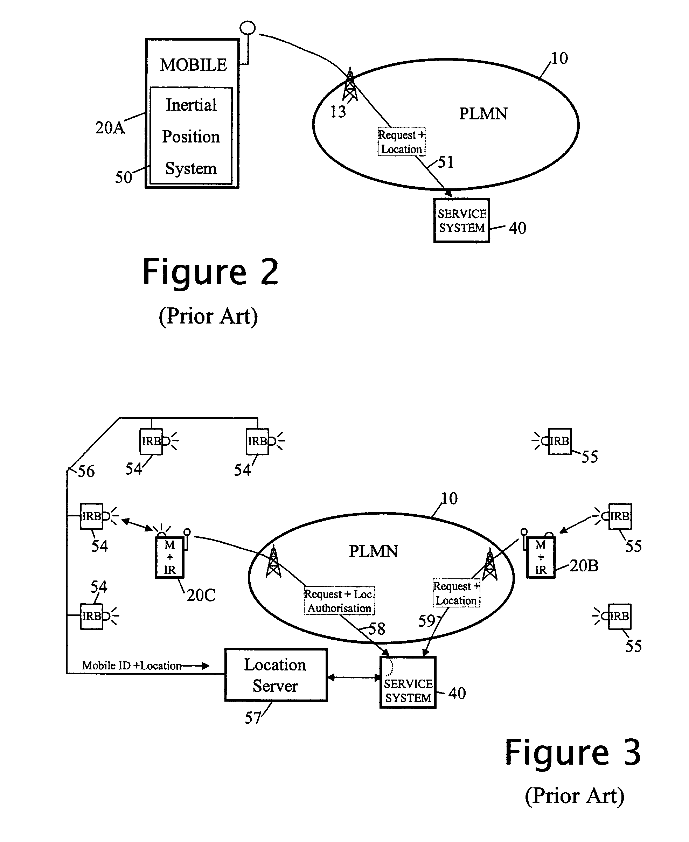

Location-aware services all require user location as an input parameter. A number of methods already exist for determining the location of a mobile user as represented by an associated mobile equipment. Example location-determining methods will now be described with reference to Figures 2 to 5. As will be seen, some of these methods result in the user knowing their location thereby enabling them to transmit it to a location-aware service they are interested in receiving, whilst other of the methods result in the user's location becoming known to a network entity from where it can be supplied directly to a location-aware service (generally only with the consent of the user concerned). It is to be understood that additional methods to those illustrated in Figures 2 to 5 exist.

As well as location determination, Figures 2 to 5 also illustrate how the mobile entity requests a location-aware service provided by service system 40. In the present examples, the request is depicted as being passed over a cellular mobile network (PLMN 10) to the service system 40. The PLMN is, for example, similar to that depicted in Figure 1 with the service request being made using a data-capable bearer service of the PLMN. The service system 40 may be part of the PLMN itself or connected to it through a data network such as the public Internet. It should, however, be understood that infrastructure other than a cellular network may alternatively be used for making the service request

The location-determining method illustrated in Figure 2 uses an inertial positioning system 50 provided in the mobile entity 20A, this system 50 determining the displacement of the mobile entity from an initial reference position. When the mobile entity 20A wishes to invoke a location-aware service, it passes its current position to the corresponding service system 40 along with the service request 51. This approach avoids the need for an infrastructure to provide an external frame of reference; however, cost, size and long-term accuracy concerns currently make such systems unattractive for incorporation into mass-market handheld devices.

Figure 3 shows two different location-determining methods both involving the use of local, fixed-position, beacons here shown as infra-red beacons IRD though other technologies, such as short-range radio systems (in particular, "Bluetooth" systems) may equally be used. The right hand half of Figure 3 show a number of independent beacons 55 that continually transmit their individual locations. Mobile entity 20B is arranged to pick up the transmissions from a beacon when sufficiently close, thereby establishing its position to the accuracy of its range of reception. This location data can then be appended to a request 59 made by the mobile entity 20B to a location-aware service available from service system 40. A variation on this arrangement is for the beacons 55 to transmit information which whilst not directly location data, can be used to look up such data (for example, the data may be the Internet home page URL of a store housing the beacon 55 concerned, this home page giving the store location - or at least identity, thereby enabling look-up of location in a directory service).

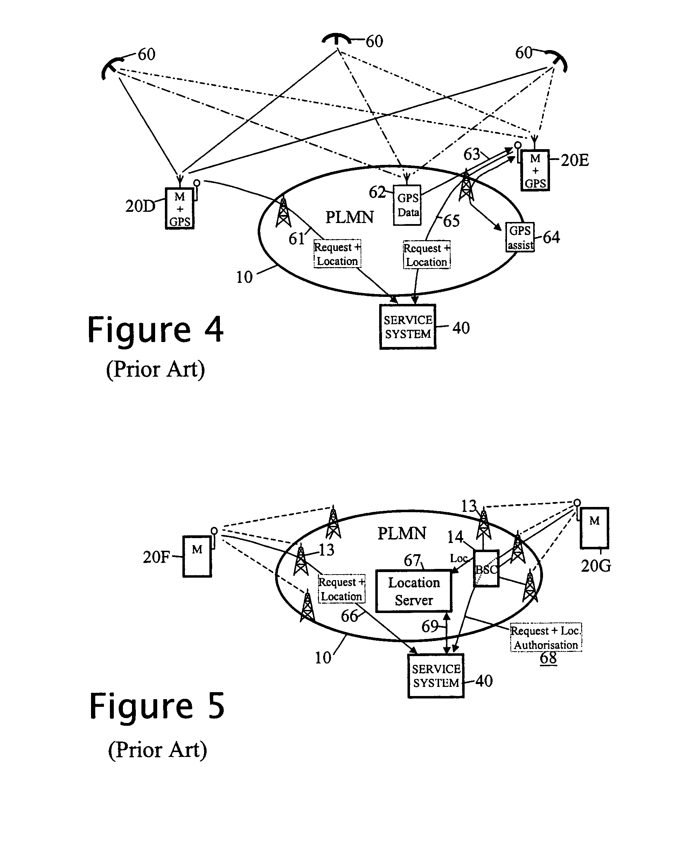

In the left-hand half of Figure 3, the IRB beacons 54 are all connected to a network that connects to a location server 57. The beacons 54 transmit a presence signal and when mobile entity 20C is sufficiently close to a beacon to pick up the presence signal, it responds by sending its identity to the beacon. (Thus, in this embodiment, both the beacons 54 and mobile entity 20C can both receive and transmit IR signals whereas beacons 55 only transmit, and mobile entity 20B only receives, IR signals). Upon a beacon 54 receiving a mobile entity's identity, it sends out a message over network 56 to location server 57, this message linking the identity of the mobile entity 20C to the location of the relevant beacon 54. Now when the mobile entity wishes to invoke a location-aware service provided by the service system 40, since it does not know its location it must include it's identity in the service request 58 and rely on the service system 40 to look up the current location of the mobile entity in the location server 57. Because location data is personal and potentially very sensitive, the location server 57 will generally only supply location data to the service system 40 after the latter has produced an authorizing token supplied by the mobile entity 20B in request 58. It will be appreciated that whilst service system 40 is depicted as handling service requests form both types of mobile entity 20 B and 20C, separate systems 40 may be provided for each mobile type (this is likewise true in respect of the service systems depicted in Figures 4 and 5).

Figure 4 depicts several forms of GPS location-determining system. On the left-hand side of Figure 4, a mobile entity 20D is provided with a standard GPS module and is capable of determining the location of entity 20D by picking up signals from satellites 60. The entity 20D can then supply this location when requesting, in request 61, a location-aware service from service system 40.

The right-hand side of Figure 4 depicts, in relation to mobile entity 20E, two ways in which assistance can be provided to the entity in deriving location from GPS satellites.

Firstly, the PLMN 10 can be provided with fixed GPS receivers 62 that each continuously keep track of the satellites 60 visible from the receiver and pass information in messages 63 to local mobile entities 20E as to where to look for these satellites and estimated signal arrival times; this enables the mobile entities 20E to substantially reduce acquisition time for the satellites and increase accuracy of measurement (see "Geolocation Technology Pinpoints Wireless 911 calls within 15 Feet" 1-Jul-99 Lucent Technologies, Bell Labs). Secondly, as an alternative enhancement, the processing load on the mobile entity 20E can be reduced and encoded jitter removed using the services of network entity 64 (in or accessible through PLMN 10).

One the mobile unit 20E has determined its location, it can pass this information in request 65 when invoking a location-aware service provided by service system 40.

Figure 5 depicts two general approaches to location determination from signals present in a cellular radio infrastructure. First, it can be noted that in general both the mobile entity and the network will know the identity of the cell in which the mobile entity currently resides, this information being provided as part of the normal operation of the system. (Although in a system such as GSM, the network may only store current location to a resolution of a collection of cells known as a "location area", the actual current cell ID will generally be derivable from monitoring the signals exchanged between the BSC 14 and the mobile entity). Beyond current basic cell ID, it is possible to get a more accurate fix by measuring timing and/or directional parameters between the mobile entity and multiple BTSs 13, these measurement being done either in the network or the mobile entity (see, for example, International Application WO 99/04582 that describes various techniques for effecting location determination in the mobile and WO 99/55114 that describes location determination by the mobile network in response to requests made by location-aware applications to a mobile location center - server- of the mobile network).

The left-hand half of Figure 5 depicts the case of location determination being done in the mobile entity 20F by, for example, making Observed Time Difference (OTD) measurements with respect to signals from BTSs 13 and calculating location using a knowledge of BTS locations. The location data is subsequently appended to a service request 66 sent to service system 40 in respect of a location-aware service. The calculation load on mobile entity 20F could be reduced and the need for the mobile to know BTS locations avoided, by having a network entity do some of the work. The right-hand half of Figure 5 depicts the case of location determination being done in the network, for example, by making Timing Advance measurements for three BTSs 13 and using these measurements to derive location (this derivation typically being done in a unit associated with BSC 14). The resultant location data is passed to a location server 67 from where it can be made available to authorised services. As for the mobile entity 20C in Figure 3, when the mobile entity 20G of Figure 5 wishes to invoke a location-aware service available on service system 50, it sends a request 69 including an authorisation token and its ID (possible embedded in the token) to the service system 40; the service system then uses the authorisation token to obtain the current location of the mobile entity 20G from the location server 67.

In the above examples, where the mobile entity is responsible for determining location, this will generally be done only at the time the location-aware service is being requested. Where location determination is done by the infrastructure, it may be practical for systems covering only a limited number of users (such as the system illustrated in the left-hand half of Figure 2 where a number of infrared beacons 54 will cover a generally fairly limited) for location-data collection to be done whenever a mobile entity is newly detected by an IRB, this data being passed to location server 57 where it is cached for use when needed. However, for systems covering large areas with potentially a large number of mobile entities, such as the Figure 5 system, it is more efficient to effect location determination as and when there is a perceived need to do so; thus, location determination may be triggered by the location server 67 in response to the service request 68 from the mobile entity 20G or the mobile entity may, immediately prior to making request 68, directly trigger BSC 14 to effect a location determination and feed the result to location server 67.

Further with respect to the location servers 57,67, whilst access authorisation by location-aware services has been described as being through authorisation tokens supplied by the mobile entities concerned, other authorisation techniques can be used. In particular, a location-aware service can be prior authorised with the location server in respect of particular mobile entities; in this case, each request from the service for location data needs only to establish that the request comes from a service authorised in respect of the mobile entity for which the location data is requested.

As already indicated, Figures 2 to 5 depict only some examples of how location determination can be achieved, there being many other possible combinations of technology used and where in the system the location-determining measurements are made and location is calculated, stored and used .Thus, the location-aware service may reside in the mobile entity whose location is of interest, in a network-connected service system 40 (as illustrated), or even in another mobile entity. Furthermore, whilst in the examples of Figures 2 to 5, invocation of the location-aware service has been by the mobile entity whose location is of interest, the nature of the location-aware service may be such that it is invoked by another party (including, potentially, the PLMN itself). In this case, unless the invoking party already knows the location of he mobile entity and can pass this information to the location-aware service (which may, for example, may be situation where the PLMN invokes the service), it is the location-aware service that is responsible for obtaining the required location data, either by sending a request to the mobile entity itself or by requesting the data from a location server. Unless the location server already has the needed information in cache, the server proceeds to obtain the data either by interrogating the mobile entity or by triggering infrastructure elements to locate the mobile. For example, where a location-aware service running on service system 40 in Figure 5 needs to find the location of mobile 20G, it could be arranged to do so by requesting this information from location server 67 which in turn requests the location data from the relevant BSC, the latter then making the necessary determination using measurements from BTSs 13.

Although in the foregoing, the provision of location data through the mobile radio infrastructure to the mobile entity has been treated as a service effected over a data-capable bearer channel, it may be expected that as location data becomes considered a basic element of mobile radio infrastructure services, provision will be made in the relevant mobile radio standards for location data to be passed over a signalling channel to the mobile entity.

Amongst the known location-aware services are location-aware reminders as described in the paper "Context-aware applications" (Peter Brown, Computing Laboratory Univ. of Kent at Canterbury, UK and Xerox Research Centre Europe, Cambridge). This paper describes so-called "stick-e notes" each consisting of context plus body. Each note is triggered when its context matches the present context. Context may be any one or more of: location, companions, time, computer states, environmental parameters, share prices, etc.

It is an object of the present invention to provide improved monitoring of location-associated events particularly in relation to customer / business interactions.

### Summary of the Invention

According to the present invention, there is provided a method of monitoring location-associated events, comprising the steps of:
(a) storing an event descriptor concerning an event of interest to a first party that is expected to occur at the premises of a second party, the event descriptor explicitly or implicitly identifying the parties and the location of the premises;
(b) determining when an event descriptor is matched by the identity and location of the first party and in response to such a match, checking the status of the corresponding expected event with status data provided by the second party.

### Brief Description of the Drawings

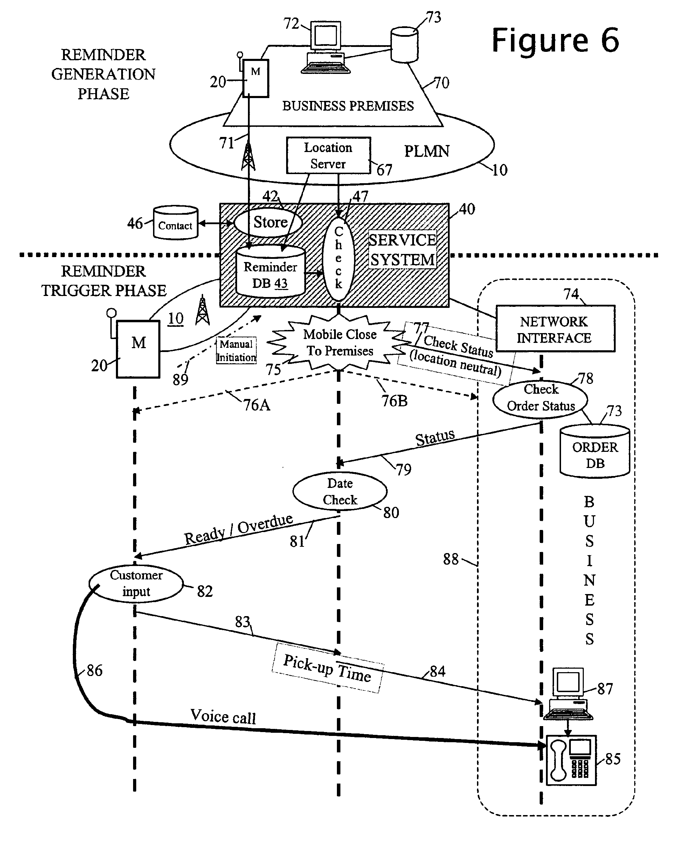

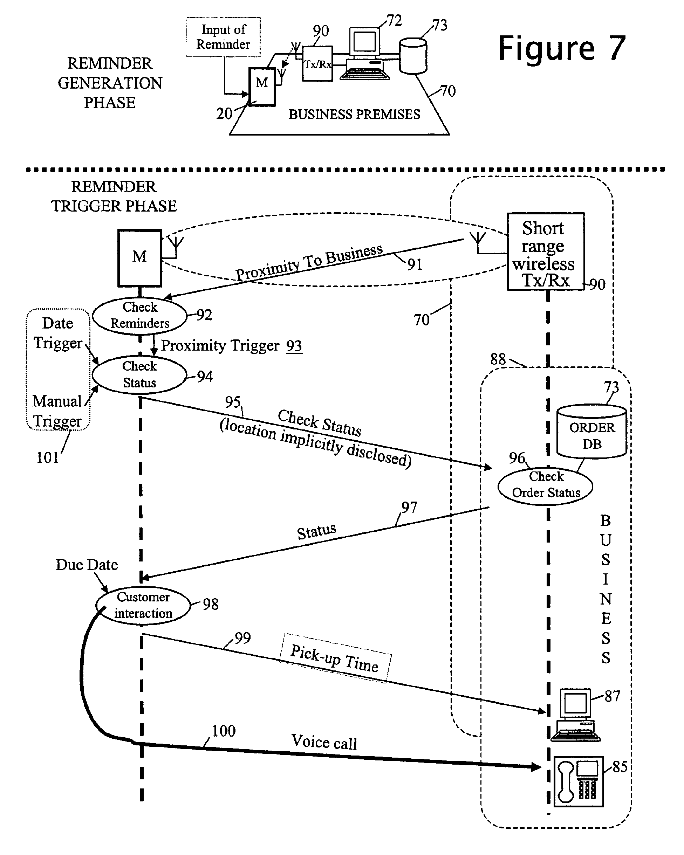

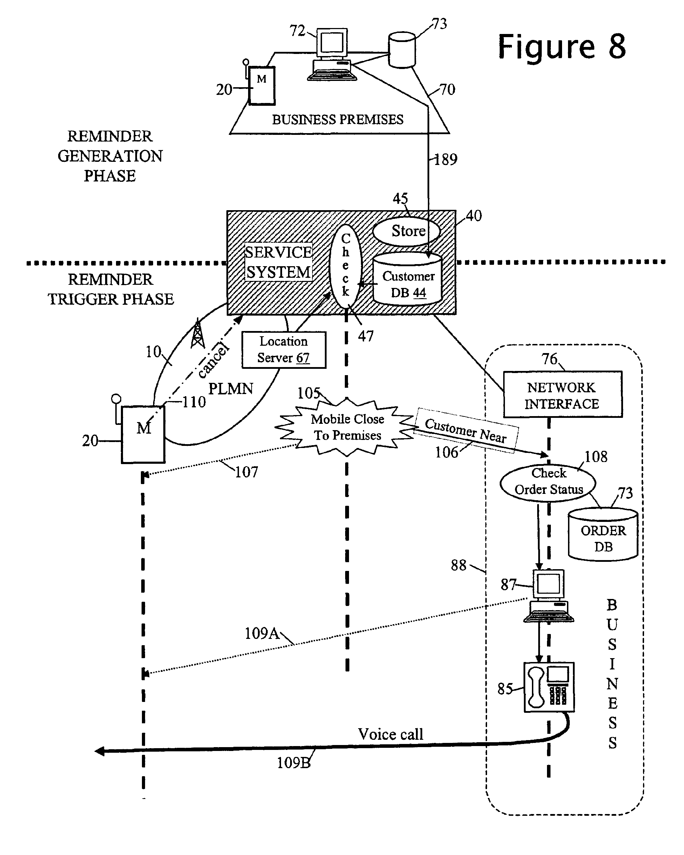

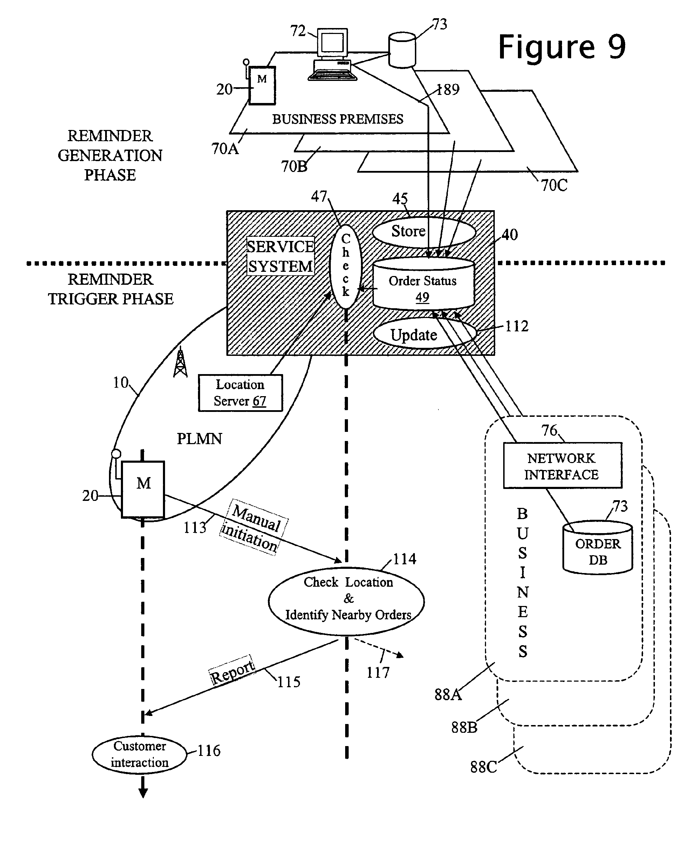

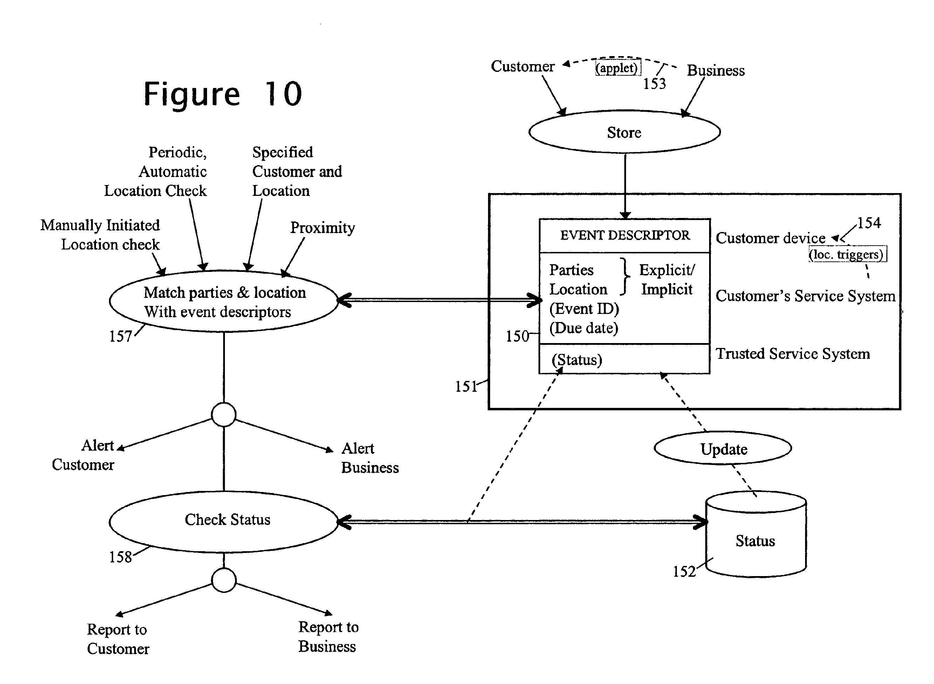

Methods and service-systems embodying the present invention, for monitoring location-associated events, will now be described, by way of non-limiting example, with reference to the accompanying diagrammatic drawings, in which:
- **. Figure 1**: is a diagram of a known communications infrastructure usable for transferring voice and data to/from a mobile entity;
- **. Figure 2**: is a diagram illustrating one known approach to determining the location of a mobile entity, this approach involving providing the entity with an inertial positioning system;
- **. Figure 3**: is a diagram illustrating another known approach to determining the location of a mobile entity, this approach being based on proximity of the mobile entity to fixed-position local beacons;
- **. Figure 4**: is a diagram illustrating a further known approach to determining the location of a mobile entity, this approach involving the use of GPS satellites;
- **. Figure 5**: is a diagram illustrating a still further approach to determining the location of a mobile entity, this approach being based on the use of signals present in a cellular mobile radio communications system;
- **. Figure 6**: is a diagram illustrating a first location-aware order status checking method and system;
- **. Figure 7**: is a diagram illustrating a second location-aware order status checking method and system;
- **. Figure 8**: is a diagram illustrating a third location-aware order status checking method and system;
- **. Figure 9**: is a diagram illustrating a fourth location-aware order status checking method and system; and
- **. Figure 10**: is a diagram depicting the inter-relationship of various features of the methods and systems of Figure 6 to 9.

### Best Mode of Carrying Out the Invention

Methods and service systems embodying the invention will now be described with reference to Figures 6 to 10, it being understood that the present invention is not limited to the specifics of the mobile entity, communication infrastructure and location discovery means shown; the generalisations discussed above in relation to Figures 1 to 5 regarding these elements apply equally to the described embodiments of the invention. Furthermore, the service system 40 of the embodiments of Figures 6, 7 and 9 can be connected directly to the public Internet, to the GPRS network 17 of PLMN 10, or to another fixed data network interfacing directly or indirectly with the network 17 or network 39, or can be otherwise accessible to the mobile entity and, where appropriate, the businesses involved in the embodiments of the invention.

Figure 6 shows a location-aware reminder service system 40 with which the user of a mobile entity 20 is registered, the service system being accessible from mobile entity 20 via a suitable data-capable bearer service of PLMN 10. When the mobile user enters business premises 70 and conducts a transaction which requires or might merit his/her return at a later date (for example, to pick up / return goods, make a payment instalment, etc.), the user logs a reminder by contacting the service system 40 and recording either a verbal reminder message or a text message. For present purposes, the user will be assumed to have placed an order for goods and will need to return to pick up the goods.

In contacting the reminder service system 40, the user is identified to the service system by any suitable means including calling line ID, username/password combination, etc. Process 42 of the service system is responsible for recording and storing the reminder in database 43 along with a user ID, an identifier for the business at premises 70 (which may be simply communications contact details but preferably also includes the name of the business), an order ID, and the location of the user. This location can be provided by a location server 67 of PLMN 10 in response to an authorised enquiry by service system 40. With respect to the identity of the business, this can be embedded in the reminder message; however, it is preferably provided as a separate data item to facilitate future reference (it could, for example be provided as a numeric code forming part of the order number). Rather than having the user directly input the business identity, the process 42 of the service system can be arranged to map the user location to a business identity using, for example, an external contact database that provides such mappings for a particular locality. Since multiple businesses may be in close proximity or one above another in a shopping mall, it is preferable that process 42 is enabled to identify key words in the reminder message and match them against the nature of the businesses reported by contact database as at the user location (database 46 providing the business description of each reported business or itself doing the matching when provided with keywords by the process 42).

Where the business identity does not include communication contact details, these are looked up by service system in contact database 46 using the business identity (and location, where it is necessary to distinguish between branches of the same business); this lookup can be deferred to such a time as there is a need to use the communication contact details.

The reminder can also include a "due date" by which the order should be ready for the customer to collect the goods concerned.

The business run at premises 70 also records the transaction through data terminal 72 with the details being stored in order database system 73 (not necessarily located at premises 70). The transaction details include the same order ID as provided to the user and an identifier by which the service system 40 can identify the user to the database system 73; conveniently, this identifier is the one used by the mobile entity 20 to identify itself to the service system.

The foregoing describes the reminder generation phase of the Figure 6 embodiment; there now follows a description of how the reminder is put to use.

The business that operates premises 70 has an associated customer contact center 88 (internal or out-sourced, and in either case not necessarily located at premises 70). This contact center has access to the order database system 73 as well as having agents with terminals 87 and telephones 85. A processing system of the contact center has an external network interface 76 through which the contact center can be contacted by service system 40 over the Internet or other appropriate network.

The service system 40 is operative to periodically check the location of the user using the services of location server 67 (see check process 47). When the user subsequently returns to the same general location as the premises 70, process 47 recognises that the mobile is close to a location for which the user has a reminder registered in database 43 (internal trigger step 75 of process 47). Process 47 now contacts the order database system 73 of the business identified in the reminder, using the communication contact details of the business; preferably, this contact is over a network, such as the internet, and is carried out in a secure manner with authentication of both parties. Once the service system has contacted the order database system 73, it passes the latter the user ID and the order number from the reminder concerned, the system 73 using this information to look up the relevant order (process 78) and return the order status (ready / not ready) to service system 40 (arrow 79). Where a due date was stored with the reminder and the order status is "not ready", the service system 79 next checks (step 80 of process 47) whether the order is overdue for being ready. If the order is overdue or is ready for collection, the service system sends an appropriate message to the mobile entity 20 (see arrow 81) to alert the user (process 82), this message being sent via a data-capable bearer service of PLMN 10. The user can now chose what to do; for example, the user can:
- ignore the message;
- go the premises 70 to pick up the goods (where the order status is ready);
- send a message back to the business, via service system 40 (see arrows 83, 84) indicating a pick up time - for convenience, the process 82 presents the user with a choice of pick up times expressed as times in advance (e.g. 5 minutes from now, 30 minutes from now, etc.) - this message is received at terminal 87 and enables the business to get the goods ready for pick up, for example, by having them available at an express pick up counter at premises 70;
- where the goods are overdue, place a call directly to the contact center to complain (see arrow 86);
- where the goods are overdue, go directly to the premises 70 to complain.

Preferably, the user can also contact the service system (using mobile entity 20 or other means, such as a home PC and the Internet) to check their reminders and initiate an order status check independently of any location trigger. One advantage of this is that the business cannot therefore assume that a check of its order system in respect of a particular customer means that the customer is at any specific location.

As an alternative to the service system checking order status upon internal trigger step 75 of process 47 indicating the location triggering of an order reminder, the service system can be arranged to alert the user directly (see dashed arrow 76A) with details of the reminder via a data-capable bearer service of PLMN 10; where a verbal reminder message has been recorded, the user can request that this be played back, the service system being responsible for setting up a voice traffic circuit to the mobile entity 20 and playing back the reminder message.

Another alternative upon internal triggering 75 of process 47, is for the service system 40 to alert the business (see arrow 76B), the business then arranging to contact the user after checking its order database system (the alert having passed the business sufficient details to enable the user order to be looked up). This arrangement amounts to the business being alerted off a reminder stored by the customer. The business can, of course, take advantage of this opportunity to provide promotional information to the customer (unless the customer has indicated that they do not wish such information).

A drawback of the Figure 6 arrangement is that it requires a continual check of the user's location by the service system using the location server 67. This continual use of third party resources is likely to be expensive for the user. As an alternative, the mobile entity can be equipped with a GPS location discovery system and the location trigger information can be held in the mobile entity (the full reminder details being retained in the service system). It is now the responsibility of the mobile entity to detect when the user is close to a location with which a reminder is associated, this being done by periodic location checks using the GPS system. When a reminder is triggered by location, the service system can be alerted to contact the relevant business or to replay the full reminder back to the user; preferably, short details of each reminder are held in the mobile entity so that upon a reminder being triggered, the user can be alerted immediately and can then decide if outward communication is required whereby to avoid incurring unwanted costs.

It is, of course, also possible to dispense with the service system and have the reminders stored in the mobile entity in their entirety, the mobile entity then providing the functionality described above in respect of the service system with appropriate modification of the procedures to take advantage of user interaction being without cost penalty.

In fact, rather than location being monitored continually on an automatic basis, it may be equally convenient for the user to manually ask for a location-based check of their reminders when they are in a general location where such reminders are likely to have been made, such as a shopping mall. Thus, a user on arrival at a shopping mall presses a hard or soft key on their mobile entity 20 to initiate location discovery and a check against the location-aware reminders (see arrow 89 in Figure 6). This manual initiation of checking can be effected both in cases where the reminders are stored in the service system and where they are stored in the mobile entity. In either case, this approach avoids the need for repeated location discovery. When the reminders are scanned for a location match, the match criteria will be based on the reminder location being within a certain distances of the current location, this distance being set to cover all locations which the user is willing to visit from the current location (for example, within 800m / ½ mile); the same tolerance could be used with the location checking done by the previously described embodiments.

Of course, rather than manual initiation of a location-based check, the user can initiate the check by a different type of specific action including by verbal instruction where the device 20 is equipped with voice recognition software and/or hardware.

As a further alternative, the location-based check of the reminders can be triggered automatically upon the user entering a specific area, for example an area corresponding to that of a shopping center. This can be conveniently achieved by monitoring the current cell ID of the PLMN cell where the user is currently located and when this cell ID corresponds to the cell ID of the cell where a shopping center exists, a location-based check of the reminders is effected. To ensure that no reminder is over-looked, a location-based check of the reminders can be effected each time the current cell ID changes. The monitoring of cell ID can be effected in mobile entity 20 or in location server 67.

The embodiment shown in Figure 7 provides for location-triggered order reminders whilst avoiding the need for any specific location discovery, whether by a service system or by the mobile entity itself. In this embodiment, the mobile entity includes a short-range wireless communication means, as does the business premises (Tx/Rx unit 90). A number of technologies exist for the short range wireless communication of information to and between mobile devices. These technologies include infra-red based technologies and low-power radio technologies (including, in particular, the recent "Bluetooth" short range wireless standard). Depending on the technology implementation, differing types of message propagation will be enabled including asynchronous message broadcast, and multicast and point-to-point duplex connections established after coordination and negotiation between communicating devices.

In the Figure 7 embodiment, the user stores order reminders in his/her mobile entity 20; the reminder can be as simple as an ID of the business at premises 70 and the relevant order number, though preferably additional information such as due date and item ordered are also included. The business ID and order number can be downloaded from the business through the short range Tx/Rx 90; indeed, this download can pass appropriate software for effecting the operations (see operations 92, 94, 98 below) required by mobile entity 20 in the order reminder method. The business also stores details of the order in its order database system 73, these details including a customer ID shared with the customer.

When the user subsequently approaches the premises 70, the short-range Tx/Rx in mobile entity 20 picks up short-range beacon transmissions 91 from short-range Tx/Rx 90 that include the ID of the business. Process 92 checks received IDs against stored reminders and if there is a match, generates a proximity trigger 93 to a check-status process 94. This process sends a check-status message, including customer and order ID, back to the Tx/Rx 90 (see arrow 95). The check-status message is passed to the contact center 88 of the business (which may or may not be located on premises 70) and an order status check is carried out (process 96), the result of which is returned (arrow 97) via Tx/Rx 90 to the mobile entity. As with the Figure 6 embodiment, if a due date has been stored with the reminder, where the order status is not ready, a check can now be made as to whether the order is overdue. The user is alerted (process 98) if either the order is overdue or is ready. The user can now proceed as described with respect to Figure 6, for example either by sending back a pick up time if the order is ready (arrow 99), or by calling the business if the order is overdue (arrow 100).

Order checking (process 94) can also be initiated by a manual trigger or by a periodic automatic scan of the reminders in mobile entity 20 showing that an order is overdue for being ready (see 101).

The embodiment shown in Figure 8 differs from that of Figures 6 and 7 in that the location-aware reminders are effectively created and stored by the business rather than the customer. Location information does not need to be explicitly stored with each reminder since the location of the business premises is known; in fact, the reminder can simply be the customer ID and order number. Thus, when the customer orders some goods, the order is entered into the order database system 73 and, at the same time, a "reminder" is stored (see arrow 189) in a database 44 of a service system 40 by process 45, the service system being contacted, for example, over the internet.

The service system 40 is responsible for matching the customer's location with the location of the business, (the latter being known to the service system) and to do this, the service system periodically requests the customer's location from location server 67 of PLMN 10, it being assumed that the customer has a mobile entity 20 that uses PLMN 10. Because customer location is sensitive data, the customer will only be willing to authorise the business knowing his/her location in certain circumstances such as the customer being close to premises 70. Accordingly, the service system 40 needs to be one trusted by the customer (such as a facility run by the PLMN operator) and which will not release any location information on the customer to the business other than an alert when the customer is nearby to premises 70. As a further reassurance, the customer can be given the right to access the service system and delete any reminders (see cancel arrow 110).

Assuming the customer has agreed to allow the service system access his/her location data for the limited purpose of alerting the business when the customer is close by, then when the customer subsequently approaches premises 70, the check process 70 will recognise this (step 105) and send an alert to the contact center 88 of the business (see arrow 106). This contact center is similar to that described with respect to Figures 6 and 7 but in this case the alert triggers a check order status process 108 that reports to the data terminal 87 of a contact-center agent rather than reporting back to the customer mobile entity 20. The agent can then contact the user directly, for example, by sending a data message (directly or via the service system, see arrow 109A) to mobile entity 20 or by placing a voice call (arrow 109B) to mobile entity 20. The business will generally have the user's contact details but these can in any case be provided by the service system.

It will be appreciated that the trigger event 105 can be used to alert the customer (arrow 107) as well as / instead of the business, and that the alert 106 to the business can be used to effect an order-status checking process reporting back to the customer as well as / instead of to the contact-center agent. Furthermore, rather than the customer's location being checked periodically by service system, the customer can initiate location discovery in a manner similar to that described above with reference to arrow 89 of Figure 6.

An advantage of the Figure 8 arrangement is that the burden of generating the reminder and paying for the service system lies with the business rather than the customer but the latter receives the benefit.

Figure 9 shows a preferred embodiment that combines several of the features already described above in relation to Figure 6 to 8; however, the Figure 9 embodiment explicitly covers the situation of reminders generated in respect of several different businesses.

In the Figure 9 embodiment, three businesses 70A, 70B and 70C are depicted, each with respective order database systems 73 and contact centers 88A, 88B, 88C. As with the Figure 8 embodiment, the order reminders are generated by each business and are sent to a common database system 40 for storage in database 49 by process 45. Each reminder identifies the customer, the business, and the order number; in addition, each reminder includes the current order status. The order status information held in database 49 is periodically updated by each business from their own database systems 73 by using update process 112 of service system 40. The service system also knows the location of each business 70A, 70B, 70C.

It may be noted that the initial storage of the reminders does not require the customer to be present at the business premises 70A, 70B, 70C (this also being true of the embodiments of Figures 7 and 8 except for the Figure 7 variant where software is downloaded by the short-range communication means).

When the customer returns to a locality where one or more of the businesses 70A, 70B, 70C are located, the customer presses a hard or soft key of their mobile entity, sending a message over PLMN 10 to the service system (see arrow 113). This message identifies the customer to the system in any appropriate manner, and authorises service system to request the customer's location from location server 67 and compare it against the location of the businesses for which there exist relevant customer reminders in database 49 (step 114 of check process 47). Since the database 49 also includes order status information, it is possible for the service system not only to identify order reminders relating to nearby businesses but also to check order status without contacting the businesses.

The service system can report back to the customer (see arrow 115 and customer interaction process 116) who can then take appropriate action in any of the ways already described. The relevant businesses can also be notified if required (dashed arrow 117).

Rather than the service system ascertaining the customer's location from location server 67, this information could be provided by the customer (for example, following use of a GPS system in the mobile entity 20). This allows the possibility of the user initiating a reminder check from a remote location (for example, from home using a home PC connected via the internet) by including a location different from where the user is currently; a customer can then check in advance whether it is worth going, for example, to a shopping mall to pick up goods ordered from several different establishments.

The initiation of location-based checking of the reminders can also be effected on the basis of the user entering a specific area as described above in relation to the Figure 6 embodiment.

The Figure 9 embodiment exhibits a number of characteristics that are attractive to customers, namely:
- no special features are required of the mobile entity;
- the customer does not need to enter any information (other than the contact number for the service system which could, for example, be stored as a speed dial number);
- the customer's location is only discovered at the instigation of the customer and is not provided to the businesses (unless alert 117 is implemented);
- the service is the responsibility of the businesses who would generally be required to pay a subscription to the service system operator;
- the initial storage of the reminders does not require the customer to be present at the business premises 70A, 70B, 70C.

So far as the businesses are concerned, the Figure 9 embodiment enables them to offer a very convenient service to their customers and, if alert 117 is implemented, offers the possibility of sending targeted promotional information to customers.

### Variants

It will be appreciated that many variants are possible to the above-described embodiments of the invention and that certain of the features described in relation to one embodiment can also be used in other embodiments. Thus, whilst in the Figure 6 embodiment, the user's location is captured and stored with the reminder using the location server 67, the location of the business could alternatively be provided by the mobile entity (either from a GPS system or from the data terminal 72 by a short-range communication means) or can be derived from business identity data input by the user (rather than location being used to derive business identity). Furthermore, it will generally be unnecessary to record the order number in the reminder since the order can be looked up for status checking by customer ID - whilst this means that the reminder would not enable the status check to distinguish between multiple orders by the same customer, generally this will not be a problem as the customer will generally wish to know the status of all his/her orders.

With respect to the customer initiation of location discovery (arrow 89 in Figure 6, arrow 113 in Figure 9), where the mobile entity 20 is equipped with location discovery means then the customer can provide the required location data to the service system rather than the customer location being provided by location server 67. In this case, arrows 89 and 113 represent an instruction to the service system to carry out a match of the reminders with the location provided with the instruction.

Whilst the foregoing embodiments have been described in relation to order fulfilment by the businesses concerned, as already indicated the reminders can relate to other classes of event such as the answering of a specific query made to the business, the availability of expected upgrades, the making of an instalment payment, etc.. Indeed, "reminders" may be recorded in respect of non-specific events indicated by the customer as of interest, such as special promotions relating to certain product types. All these types of event can be classed as events that are generally expected (some, such as order fulfilment, are very specifically expected, whilst others, such as promotions are only generally expected without specificity as to details); the term "reminder" is not wholly appropriate for the generally-expected, but non-specific events, and the term "event descriptor" is more appropriate to cover the whole class of at least generally expected events to which the present invention can be applied. It will be appreciated that so far as generally expected events such as promotions are concerned, it is much more likely that businesses will record corresponding event descriptors (e.g. as in the embodiments of Figures 8 and 9 where the businesses stored the order reminders) since although the customer may be interested in the promotions, they will generally not be bothered to set descriptors for such events themselves.

Figure 10 depicts diagrammatically how the various elements of the above-described embodiments inter-relate and persons skilled in the art will be able to see that a number of additional feature combinations that have not been specifically described are possible. More specifically, the right-hand side of Figure 10 depicts the possibilities for storing event descriptors 150, namely that the descriptors are stored either by the customer or by business in a storage system 151 provided by one of: the customer's device (Figure 7), a customer service system (Figure 6), and a customer-trusted service system (Figures 8 and 9). The event descriptor 150 includes the identities of the parties and the location of the premises; certain of these elements may be implied, for example:
- where the descriptors are stored in the customer's mobile entity, then the customer's identity does not need to be stored explicitly in the event descriptors;
- where the descriptors are stored in a trusted service system paid for by a particular business (as in Figure 8), the identity of that business and the location of its premises 70 does not need to be stored in every event descriptor, the information being stored once by the service system);
- where the customer is to be judged as nearby the business when the customer's short-range Tx/Rx unit picks up beacon signals from a corresponding unit located at premises 70 (as in Figure 7), then the location of the premises does not need to be stored - it is effectively implicit in the business identity data stored in the descriptor.

The event descriptors will often also include event ID data and "due date" data. The descriptors may also include status information as described with reference to Figure 9, this information being updated periodically from a status database 152 of the business.

The right-hand side of Figure 10 also depicts the already mentioned possibilities of having the business download appropriate software to the mobile entity of the customer (see arrow 153), and having location trigger data transferred into the mobile entity (arrow 154).

The left-hand side of Figure 10 depicts the location matching of customer and event descriptors. The matching process 157 can be triggered by automatic location updates on the position of the customer (Figure 6), by a customer-initiated location fix (Figure 9), by proximity to the business premises as detected by picking up beacon signals from a short range Tx/Rx (Figure 7), or by the input of specific customer and location data (which may not correspond to the customer's actual current location). Where event-descriptor matches are found for the customer in the specified location, an event status check can be carried out and/or one or both of the parties (customer, business) alerted. If a status check is effected, the results can be reported back to either or both of the parties.

Where an event is associated with more than one premises of a business (for example, a promotion taking place at several stores of a business), then the event descriptor could include the location of each relevant premises so as to produce a match when the customer is close to any of the premises.

It will be appreciated that where the customer is responsible for storing the event descriptors and does so in mobile entity 20, then the collection of stored descriptors will generally only concern that particular customer; however, where the customer stores the event descriptors in a third-party service system, that system may contain other collections of descriptors associated with different customers. Where it is a business that is responsible for storing event descriptors in a third-party service system, then the descriptors will generally relate to many different customers of that business. In arrangements such as that shown in Figure 9, the service system stores event descriptors concerning many different customers associated with multiple businesses.

## Claims

1. A method of monitoring location-associated events, comprising the steps of:
(a) storing an event descriptor concerning an event of interest to a first party that is expected to occur at the premises of a second party, the event descriptor explicitly or implicitly identifying the parties and the location of the premises;
(b) determining when an event descriptor is matched by the identity and location of the first party and in response to such a match, checking the status of the corresponding expected event with status data provided by the second party.

2. A method according to claim 1, wherein the event descriptor is stored by the second party in a third-party service system, the location of the first party being provided to the third-party service system for effecting the step (b) determination either by the first party or by a location server.

3. A method according to claim 1, wherein the event descriptor is stored by the first party in a third-party service system, the location of the first party being provided to the third-party service system for effecting the step (b) determination either by the first party or by a location server.

4. A method according to claim 1, wherein the event descriptor is stored by the first party in a mobile entity of the first party, the mobile entity including location discovery means for providing the location of the first party to the determination carried out in step (b).

5. A method according to claim 1, wherein the event descriptor is stored by the first party in a mobile entity of the first party, the mobile entity including short-range wireless communication means for receiving signals from corresponding means at the premises of the second party, the receipt of such signals being used in the determination carried out in step (b) to indicate a match for the event descriptor.

6. A method according to any one of the preceding claims, wherein the status data is held in a status database maintained by the second party, the status check carried out in step (b) being effected by accessing the status database.

7. A method according to claim 2, wherein the status data is provided by the second party to the third-party service system where it is stored, the status check carried out in step (b) being effected by accessing the status data held by the third-party service system.

8. A method according to claim 1, wherein the result of the status check carried out in step (b) is reported to the first party.

9. A method according to any one of claims 1 to 7, wherein the event concerns the availability of an item for collection at the premises.

10. A method according to claim 9, wherein step (b) further involves reporting the result of the status check to the first party at least when this check indicates that the item is available for collection.

11. A method according to claim 10, wherein the event descriptor includes date data specifying an expected date when the item will be available for collection, step (b) further involving checking whether the item is overdue and not available for collection, and reporting such circumstances to the first party.

12. A method according to claim 10, wherein the first party on receiving a report that said item is available for collection, informs the second party of a planned collection time.

13. A method according to claim 2, wherein the location of the first party is only provided to the third-party service system upon specific action by the first party indicating that any match is to be identified.

14. A method according to claim 2 or claim 3, wherein the second party is given no indication of the location of the first party by the third-party service system except to the extent that a said match is directly or indirectly indicated to the second party.

15. A computer program product for use in monitoring location-associated events, the product comprising:
- a first component which when run by general-purpose processing means provides:
- a database interface for storing and retrieving event descriptors each concerning an event of interest to a first party that is expected to occur at the premises of a second party, the event descriptor explicitly or implicitly identifying the parties and the location of the premises, and
- a match subsystem for determining when an event descriptor is matched by the identity and location of the first party ; and
- a second component which when run by general-purpose processing means provides:
- database interface for storing and retrieving event status data provided by the second party,
- a status-check subsystem that in response to the match subsystem determining a match, is operative to check the status of the corresponding expected event as indicated by the event status data.

16. A computer program product according to claim 15, further comprising a third component which when run by general-purpose processing means provides an output subsystem for reporting the result of the status check to the first party.

17. A computer program product according to claim 15, wherein the events concern the availability of items for collection at the premises, the computer program product further comprising a third component which when run by general-purpose processing means provides an output subsystem for reporting the result of the status check to the first party at least when this check indicates that the item is available for collection.

18. A computer program product according to claim 15, wherein the events concern the availability of items for collection at the premises, the computer program product further comprising a third component which when run by general-purpose processing means provides an output subsystem for reporting to the first party as a result of the status check when an item will be available for collection.

19. An arrangement for using the computer program product of claim 15, the arrangement comprising:
- a service system having general purpose processing means on which said first component is installed, and a database subsystem for holding the event descriptors;
- a data-processing system associated with the second party and having general purpose processing means on which said second component is installed, and a database subsystem for holding the event status data.

20. A system for using the computer program product of claim 15, the system comprising:
- general purpose processing means on which said first and second components are installed, and
- a database subsystem for holding the event descriptors and event status data.
